# EUROPEAN PATENT APPLICATION

(11) **EP 2 908 411 A1**
(43) Date of publication of application: **19.08.2015**
(21) Application number: 14155562.3
(22) Date of filing: 18.02.2014
(51) Int. Cl.: H02K 11/00

(54) **Circuit for compensating bearing currents of an electric machine**

(71) Applicant: Siemens Aktiengesellschaft, 80333 München (DE)
(72) Inventor: Rupp, Jürgen, 91056 Erlangen (DE); Tischmacher, Hans, 91207 Lauf (DE); Wadsholt, Klaus, 7300 Jelling (DK)

(57) **Abstract**

The invention relates to a circuit for compensating bearing currents of an electric machine (1), which comprises a stator having a stator winding, a rotor having a rotor winding or a set of permanent magnets, a bearing having a first member connected to the rotor and a second member connected to the stator via an isolator for allowing the stator and the rotor to move relative to each other, and a converter for providing a common-mode signal to the stator winding. During operation of the electric machine (1), due to a parasitic network (10) and a common-mode noise signal applied to the stator winding, a first voltage occurs at the first member of the bearing. The circuit comprises a compensation means which is adapted to provide a second voltage to the second member of the bearing wherein the amount and/or time curve of the second voltage corresponds to the amount and/or time curve of the first voltage or at least is approximated to the amount and/or time curve of the first voltage.

## Description

The invention relates to a circuit for compensating bearing voltages of an electric machine.

An electric machine, such as a direct drive windturbine or an industrial drive, comprises a stator, a rotor, a bearing, a cabling, a grounding system and a converter. Typically, the stator comprises a stator winding. The rotor comprises a rotor winding or a set of permanent magnets. A first member of the bearing in the form of a first ring is connected to the rotor and a second member in the form of a second ring which is isolated to the stator is connected to the stator to allow the stator and the rotor to move relative to each other. By help of the converter a so-called common-mode noise signal is provided to the winding. Due to the operation of the inverter, by applying high common-mode noise signals to the stator winding bearing currents occur, which jeopardize the lifetime of electric machine. The bearing currents can occur due to a parasitic network which itself is caused by the mechanical properties and the electric properties of the electric machine.

To reduce the common-mode noise signal and the bearing currents a couple of measures are well-known. Typically isolated bearings are used to have an isolation between the second member of the bearing and the stator. However, this results in a capacity of the parasitic network between the second member of the bearing and the stator. For higher frequencies (in the range of 10 ... 100 KHz up to MHz) of the signal, the parasitic capacity is permeable depending on the thickness and area of the isolation. The isolation of the bearing works well for lower frequencies, i.e. values below the above mentioned frequency range. This parasitic capacity shorts the isolation for the high frequency, so the bearing currents will only be reduced by blocking lower frequency content.

Furthermore, it is known to use so-called earthing brushes to the rotating parts. As a disadvantage, for higher frequencies the brushes have an impedance due to parasitic inductance that cannot be neglected. In addition, the erosion of the brushes via operation is the most disadvantage of this protecting system.

Furthermore, common-mode chokes are used for the power cables as well as shielded, symmetrical cables.

These measures are able to reduce bearing currents to a certain extent. However, it would be desirable to have an even improved solution which is able to nearly eliminate bearing currents.

It is therefore an object of the present invention, to provide a measure which helps to reduce bearing currents in an electric machine, in particular a direct drive windturbine or an industrial drive.

This object is solved by a circuit according to the features of claim 1. Preferred embodiments are set out in the dependent claims.

According to the invention, a circuit for compensating bearing currents of an electric machine is provided. The electric machine comprises a stator having a stator winding; a rotor a rotor winding or a set of permanent magnets; a bearing having a first member connected to the rotor and a second member connected to the stator via an isolator for allowing the stator and the rotor to move relative to each other; and a converter providing a common-mode signal to a stator winding. During operation of the electric machine, due to a parasitic network and a common-mode noise signal applied to the stator winding, a first voltage occurs at the first member of the bearing. According to the invention, the circuit comprises a compensation means which is adapted to provide a second voltage to the second member of the bearing wherein the amount and/or time curve of the second voltage corresponds to the amount and/or time curve of the first voltage or at least is approximated to the amount and/or time curve of the first voltage.

During operation of the electric machine, the common-mode noise signal is applied by the inverter to the windings of the machine, where it gets coupled by a parasitic winding-rotor capacity to the rotor including the second member of the bearing. Due to a bearing capacity between the first and the second member the signal is transferred to the second member and grounded by a parasitic capacity of the insulation between the second member and the stator. When the voltage across the bearing gets too high for a thin oil film between the first and the second member of the bearing, a sparkover can occur. Even when no sparkover takes place, the capacitive current will be present according to the voltage load.

The invention is based on a compensation method. The invention is based on the consideration to make a compensation of the common-mode noise signal being present at the first member of the bearing. The source of the common-mode noise signal is well-known and may be used for compensation. As a result, the voltage load across the bearing, i.e. between the first and the second member, can be reduced.

The invention may be used for several types of bearings, such as sleeve bearings, journal bearings, friction bearings (roller, ball and needle bearings). According to the type of bearing the first member might be an outer ring and the second member an inner ring.

It is also to be understood that the term "rotor winding" comprises a squirrel-cage rotor.

According to a preferred embodiment, the compensation means is adapted to generate a signal which is approximately the same as the signal which is present at the first member. Hence, the first signal present at the first member is derivable from the common-mode noise signal which is fed to the stator winding. The compensation may be accomplished by applying a defined portion of the common-mode noise signal as a second voltage to the second member of the bearing.

According to a further preferred embodiment, the second signal generated by the compensation means and applied to the second member is derived from the common-mode noise signal. This enables a precise compensation of the common-mode signal being present at the first member of the bearing.

According to a further embodiment, the compensation means consists of a number of elements modelling the parasitic network which represent machine elements. The number of elements consists of at least one capacitor, at least one resistor and at least one reactor.

In one embodiment, the values of the numbers of elements may be fixed, i.e. constant. In another embodiment, the value of at least one selected element of the number of elements may be adaptive. It is preferred if this selected element is a resistor.

According to a further embodiment, a compensation means consists of a brush or a slider which connects the first and the second element of the bearing electrically.

The electric machine may be a direct drive windturbine or an industrial drive.

Summarizing, it is suggested to use the bearing current causing common-mode voltage across the bearing to compensate at least partly the voltage across the bearing.

The invention will be described in more detail by reference to the accompanying figures.
- Fig. 1: shows a first equivalent circuit diagram for a direct drive generator of a wind turbine comprising a compensation circuit for bearing currents of the electric machine.
- Fig. 2: shows an equivalent circuit diagram for an industrial motor comprising a compensation circuit according to a second embodiment of the invention.

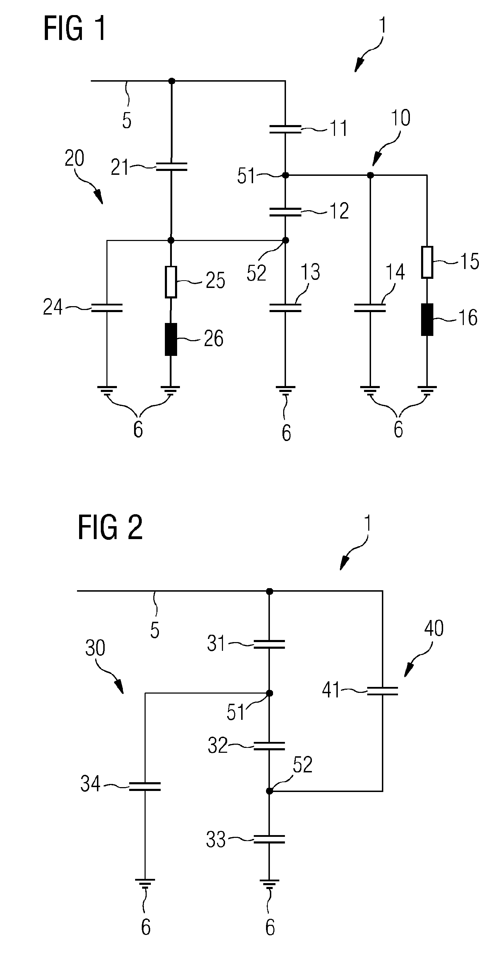

Fig. 1 shows an equivalent circuit diagram for a direct drive generator, for example in use in windturbines, which comprises a compensation circuit according to the invention. As known to the skilled person, such a direct drive generator comprises a stator having a stator winding. The stator is surrounded by a rotor having a set of permanent magnets to provide an external rotor motor. However, instead of a set of permanent magnets, the rotor may have a rotor winding as well.

The stator and the rotor are connected to each other by means of a bearing. The bearing comprises the first member connected to the rotor which is called an outer ring and a second member connected to the stator which is called an inner ring. The bearing allows the stator and the rotor to move relative to each other because of the existence of rolling elements, such as balls or rollers, between the two bearing rings, i.e. the outer ring and the inner ring.

While the outer ring is attached to the rotor in such a way that an electrical connection is given, the inner ring is attached to the stator via an isolation. However, it is to be understood that the structure described above is not the only possibility for generators which are used in wind generators. Also, a setup with the stator outside and the rotor inside is possible. The isolation prevents signals having lower frequencies from generating a bearing current which should be avoided. However, the isolation is not suitable to block signals with higher frequencies due to a parasitic network, in particular a parasitic capacity of the isolation.

In the equivalent circuit diagram of Fig. 1 the elements of the parasitic networks are depicted with reference sign 10. Elements of the parasitic network 10 are depicted with 11-16. 11 is a parasitic capacitor between the winding 5 and the rotor of the electric machine. 12 depicts a parasitic capacitor between the outer ring of the bearing and the inner ring of the bearing. In short, this capacitor will be called the parasitic capacitor of the bearing. 13 depicts a parasitic capacitor of the isolation, i.e. between the inner ring of the bearing and the stator of the electric machine. A first node 51 between the parasitic capacitor 11 and the parasitic capacitor 12 has the electric potential (voltage) of the outer ring of the bearing. The first node 51 represents the first element or outer ring of the bearing. Between the node 51 and a reference potential 6 (e.g. ground) a parasitic capacitor 14 between the rotor and the stator is depicted. A series circuit of a parasitic resistor 15 and a parasitic reactor 16 is connected between the node 51 and the reference potential 6. The parasitic resistor 15 and the parasitic resistor 16 represent a grounding brush, which seeks to reduce bearing currents without further measures.

The parasitic capacitor 11, i.e. the capacity between winding and rotor, is the source of the problem of propagation of the common-mode signal to the outer ring of the bearing. The parasitic capacitor 14 forms a voltage divider in conjunction with the parasitic capacitor 11. The value of the parasitic capacitor 14 is constant because of the design of the electric machine and the layout of the rotor and the stator.

During operation of the electric machine 1, the parasitic network 10 causes, because of the application of a common-mode signal from the inverter (not shown) to the stator winding 5 a first voltage at node 51 having a certain amount and/or a certain time curve. As described, the first voltage is present at the outer ring of the bearing because of the parasitic capacitor 11 and the other parasitic elements. To reduce this voltage load across the bearing a defined portion of the common-mode signal is applied to the inner ring, i.e. a second node 52 between the parasitic capacitor 12 (capacity of the bearing) and the parasitic capacitor of the isolation 13.

In one alternative, the voltage for the compensation could be directly taken from the outer ring using a kind of a brush or slider. In this case, a lead connecting the outer ring and the inner ring should be as short as possible to avoid significant sliding contact impedance.

Using the compensation circuit illustrated in Fig. 1 as a second alternative, such a kind of brush or slider can be avoided. Furthermore, the compensation circuit may be installed on the non-rotating part (stator) of the electric machine using the common-mode signal directly from the winding 5.

The compensation circuit 20 consists of the elements 21, 24, 25, 26. 21 is a compensation capacitor which is connected between the winding 5 and the second node 52, i.e. the inner ring. This compensation capacitor 21 seeks to compensate a parasitic capacity of the parasitic capacitor 11. A compensation capacitor 24 is connected between the second node 52 and the reference potential 6. Its capacity corresponds to the parasitic capacity of parasitic capacitor 14. A series circuit consisting of a compensation resistor 25 and a compensation reactor 26 is connected between the second node 52 and the reference potential 6. The values of the resistor and the reactor 25, 26 correspond to the values of the parasitic resistor 15 and the parasitic reactor 16, respectively.

The values of the parasitic components 11-16 can be determined with the help of experiments. Since the values of the parasitic components are constant during operation of the electric machine, it is in principle sufficient to provide a compensation circuit with static components, i.e. the values of the components are fixed. However, at least some of the components of the elements of the compensation circuit may be adaptive. Preferably, the value of the compensation resistor 25 may be adaptable. By adapting the value of the compensation resistor 25, different contact properties of the grounding brush to the rotor can be considered.

By providing the compensation circuit, the voltage difference between the first node 51 and the second node 52 can be reduced and in best case eliminated. As a result, bearing currents can be reduced or, in best case, avoided. This is made by applying a defined portion of the common-mode signal to the node 52 which represents the inner ring of the bearing and which is, in case of Fig. 1, isolated and not rotating.

The procedure as described above can be used in industrial drive applications as well, as long as isolated bearings are installed.

Fig. 2 shows an equivalent circuit diagram for an exemplary kind of an industrial motor with a compensation circuit according to the invention. The parasitic network 30 comprises parasitic capacitors 31, 32, 33, 34. 31 is a parasitic capacitor between the winding 5 and the rotor of the electric machine. 32 is a parasitic capacitor of the bearing, i.e. the capacitor built between a rotating shaft and a bearing bracket. In this example, the rotating shaft is connected to a first element, e.g. an inner ring, of the bearing while the bearing bracket is connected to an outer ring of the bearing. It is clear to a skilled person that an industrial motor can be designed as an "external-rotor-motor" as well. 33 is a parasitic capacitor of the isolation which is between the bearing bracket and a housing of the industrial drive. 34 is a parasitic capacitor between the rotor and the stator. The parasitic capacitor 34 is connected between the first node 51 representing a rotating shaft and the reference potential 6 of the industrial drive. The first node 51 is built between the parasitic capacitor 31 (the capacity between the winding and the rotor) and the parasitic capacitor 32 of the bearing. In other words, the first node 51 represents the potential of the rotating shaft.

The second node 52 is built between the parasitic capacitor 32 of the bearing and the parasitic capacitor 33 of the isolation. This means that the second node 52 represents the bearing bracket or end shield of the bearing.

The compensation circuit 40 consists of a single element in form of a compensation capacitor 41. The compensation capacitor 41 is connected between the second node 52, i.e. the potential of the bearing bracket, and the winding 5. The value of the compensation capacitor 41 may be measured or calculated by simulation.

Summarizing, for reducing the voltage across the bearing in case of a generator in windturbines the inner ring is applied with a signal which should be approximately the same as the signal on the outer ring. The signal can be derived from the common-mode source of the windings, e.g. a star-point, and connected by the compensation circuit to the inner ring. The elements of the compensation circuit shall be chosen in a way that the voltage on the inner ring approaches as good as possible the voltage on the outer ring.

As described in the example, a network of a capacity and a resistor/reactor voltage divider is used which represents the machine elements 11 (capacity between the winding and the rotor), 14 (capacity between the rotor and the stator) and 15 and 16 (representing the earthing brush via resistor and reactor).

For the easiest case, the compensation circuit can be built by fixed elements, assuming the parasitic network can be considered to be almost constant. Even if this is not all the time the case the voltage across the bearing can at least be reduced which reduces bearing currents.

If the parasitic elements of the electric machine are widely varying, the compensation network can also be made adaptive to achieve a better reduction of the bearing voltage. As already described, it is sufficient to only make a resistor be adaptable.

## Claims

1. A circuit for compensating bearing voltages to reduce bearing currents of an electric machine (1),
the electric machine (1) comprising:
- a stator having a stator winding,
- a rotor having a rotor winding or a set of permanent magnets,
- a bearing having a first member connected to the rotor and a second member connected to the stator via an isolator for allowing the stator and the rotor to move relative to each other, and
- a converter for providing a common-mode signal to the stator winding;
wherein, during operation of the electric machine (1), due to a parasitic network (10) and a common-mode noise signal applied to the stator winding, a first voltage occurs at the first member of the bearing;
the circuit comprising a compensation means which is adapted to provide a second voltage to the second member of the bearing wherein the amount and/or time curve of the second voltage corresponds to the amount and/or time curve of the first voltage or at least is approximated to the amount and/or time curve of the first voltage.

2. The circuit according to claim 1, wherein the compensation means is adapted to generate a signal which is approximately the same as the signal which is present at the first member.

3. The circuit according to claim 1, wherein the first signal present at the first member is derivable from the common-mode noise signal.

4. The circuit according to one of the preceding claims, wherein the second signal generated by the compensation means and applied to the second member is derived from the common-mode noise signal.

5. The circuit according to claim 4, wherein the compensation means consists of a number of elements modelling the parasitic network (10) which represent machine (1) elements.

6. The circuit according to claim 5, wherein the number of elements consists of at least one capacitor, at least one resistor and at least one reactor.

7. The circuit according to claim 6, wherein the values of the number of elements are fixed/constant.

8. The circuit according to claim 6 or 7, wherein the value of at least one selected element of the number of elements is adaptive.

9. The circuit according to claim 8, wherein the selected element is a resistor.

10. The circuit according to one of the preceding claims, wherein the compensation means consists of a brush or a slider which connects the first and the second element of the bearing electrically.

11. The circuit according to one of the preceding claims, wherein the electric machine (1) is a direct drive wind turbine.

12. The circuit according to one of the preceding claims, wherein the electric machine (1) is an industrial drive.
